# EUROPÄISCHE PATENTSCHRIFT

(11) **EP 2 923 556 B1**
(45) Veröffentlichungstag und Bekanntmachung des Hinweises auf die Patenterteilung: **05.08.2020**
(21) Anmeldenummer: 14198394.0
(22) Anmeldetag: 17.12.2014
(51) Int. Cl.: A01D 45/02

(54) **Vorsatzgerät für einen selbstfahrenden Mähdrescher zum Ernten von Mais**
Front attachment for a self-propelled combine-harvester for harvesting maize
Appareil frontal pour une moissonneuse-batteuse auto-tractée destinée à la récolte de maïs

(30) Priorität: 27.03.2014 DE 102014104304
(43) Veröffentlichungstag der Anmeldung: 30.09.2015
(73) Patentinhaber: CLAAS Selbstfahrende Erntemaschinen GmbH, 33428 Harsewinkel (DE)
(72) Erfinder: Lütke Harmann, Tim, 48324 Sendenhorst (DE); Aerdker, Bernhard, 48231 Warendorf (DE); Herter, Felix, 33428 Harsewinkel (DE); Pàzsik, András, 5600 Békéscsaba (HU); Lenti, Tibor, 5662 Csanádapáca (HU); Esses, Sándor, 5240 T Túrkeve (HU); Albinger, Bernd, 33378 Rheda-Wiedenbrück (DE); Zegota, Thomas, 33428 Harsewinkel (DE)
(74) Vertreter: CLAAS Gruppe

(56) Entgegenhaltungen:
- EP-A1- 1 129 610
- EP-A1- 1 305 998
- DE-A1- 19 959 282
- US-A- 5 826 415

## Beschreibung

Die Erfindung betrifft ein Vorsatzgerät für einen selbstfahrenden Mähdrescher zum Ernten von Mais mit mehreren Arbeitseinheiten zugeordnete Pflückeinrichtungen, Fördereinrichtungen und Schneid- beziehungsweise Häckseleinrichtungen, wobei die Pflückeinrichtung einer Arbeitseinheit aus einem zwischen Pflückblechen gebildeten Pflückspalt und paarweise unterhalb des Pflückspaltes angeordneten, gegenläufig angetriebenen Pflückwalzen besteht, und wobei die jeweilige Schneid- beziehungsweise Häckseleinrichtungen zumindest ein Messer aufweist, welches um eine im Wesentlichen vertikal verlaufende Drehachse rotiert und dessen radiale Erstreckung in einer unterhalb der Pflückwalzen verlaufenden Ebene angeordnet ist.

Mais wird als Hackfrucht in Reihenkultur angebaut, wobei eine Aussaat mittels Einzelkornsaat erfolgt. Die ausgewachsenen Maispflanzen erreichen in der Regel eine Wuchshöhe von bis zu drei Metern. Wesentliche Bestandteile der Maispflanze sind ein Maisstängel, bis zu einem Meter lange Maisblätter sowie Fruchtstände, die als von Hüllblättern umschlossene Maiskolben ausgebildet sind. Bei der Maisernte unterscheidet man zwei wesentliche Arten, nämlich zum einen die Ernte mittels eines Maishäckslers, mit dem die gesamte Maispflanze einschließlich der Maiskörner zerkleinert wird, um diese anschließend in Form von Silomais als Futtermittel zu verwenden. In dieser zerkleinerten Form kann die Maispflanze auch als Biomasse Biogasanlagen zugeführt werden. Die für die Ernte der Maispflanzen verwendeten Maishäcksler verarbeiten, wie bereits dargelegt, die gesamte Maispflanze, so dass der Fruchtstand, also der die Maiskörner aufnehmende Maiskolben, nicht von den übrigen Pflanzenbestandteilen entfernt werden muss.

Demgegenüber wird bei der Ernte von Körnermais ein Mähdrescher eingesetzt, in welchem die Maiskörner mittels eines Dreschwerkes aus dem Maiskolben ausgedroschen und anschließend in einer Körneraufbereitung von weiteren Verunreinigungen getrennt werden. Ein entsprechend eingesetzter Mähdrescher wird anstelle seines für eine Getreide- oder Rapsernte üblichen Schneidwerks mit einem Vorsatzgerät für die Maisernte versehen ist. Dieses Vorsatzgerät sorgt für einen kontrollierten Einzug der gesamten Maispflanze in eine Pflückeinrichtung, in welcher die Maiskolben von den Maisstängeln entfernt und anschließend über einen Querförderer und einen Schrägförderer einem Dreschwerk des Mähdreschers zugeführt werden. Ein entsprechendes Vorsatzgerät weist je nach seiner Gesamtarbeitsbreite eine bestimmte Anzahl von Arbeitseinheiten auf, die jeweils durch Halmteiler begrenzt sind.

Es gibt Vorsatzgeräte, die ausschließlich für eine reihenabhängige Ernte der Maispflanzen geeignet sind, das heißt, die einzelnen Einzugseinrichtungen sind entsprechend dem Reihenabstand einzustellen, und der Mähdrescher muss mit dem Vorsatzgerät orientiert nach diesen Reihen betrieben werden. Die Problematik besteht in diesem Fall aber darin, dass bei einer Änderung des Reihenabstands der Erntevorsatz mit erheblichem Montageaufwand auf diesen geänderten Reihenabstand umgerüstet werden muss. Daher ist bereits versucht worden, durch unterschiedliche Lösungen einen reihenunabhängigen Erntevorgang, bei dem die Erntemaschine nicht exakt der Reihenkultur folgen muss, zu ermöglichen.

Leider haben sich bei derartigen Lösungen bislang erhebliche Probleme ergeben, denn es muss bei der technischen Gestaltung des Vorsatzgerätes berücksichtigt werden, dass die Maispflanzen nicht in einer entsprechenden kontinuierlich zur jeweiligen Einzugseinrichtung verlaufenden Reihe von dieser erfasst und anschließend den nachgeschalteten Pflückeinrichtungen zugeführt werden. Während des Pflückvorgangs wird der Maisstängel in Richtung des Bodens gezogen, wobei er während dieser Bewegung über eine Schneid- und Häckseleinrichtung bodennah abgeschnitten, zerkleinert und auf dem Feld abgelegt wird. Zu berücksichtigen ist, dass im Mähdrescher ein möglichst kontinuierlicher Erntegutstrom verarbeitet werden soll und ein hoher Erntegutdurchsatz erzielbar ist. Wichtig ist, dass ein möglichst bodennaher Schnitt des Maisstängels erfolgt, da ansonsten in lange Maisstoppeln Schädlinge, wie beispielsweise der Maiszünsler eindringen könnten. Eine entsprechende Erntevorrichtung mit einem in dieser Weise ausgebildeten Vorsatzgerät ist Gegenstand der Erfindung. Dieses Vorsatzgerät soll allerdings mit den gleichen Vorteilen auch für eine reihenabhängige Körnermaisernte geeignet sein, das heißt, die vorliegende Erfindung ist nicht auf Vorsatzgeräte für eine reihenunabhängige Maisernte beschränkt

Ein für eine Körnermaisernte vorgesehenes Vorsatzgerät für einen Mähdrescher der im Oberbegriff des Patentanspruchs 1 genannten Gattung ist aus der DE 199 59 282 A1 bekannt. Über dessen Breite sind mehrere Arbeitseinheiten, die jeweils durch Halmteiler voneinander getrennt sind, verteilt angeordnet. Dabei weist jede dieser Arbeitseinheiten obere und untere Fördereinrichtungen mit radial verlaufenden Zinken, eine Pflückeinrichtung sowie eine Schneid- und Häckseleinrichtung auf. Nach einem ersten Ausführungsbeispiel sind die Fördereinrichtungen sowie die Scheid- und Häckseleinrichtung jeweils in der Längsmittelebene einer jeden der Arbeitseinheit angeordnet, während sich die Pflückeinrichtung in einem außermittigen Bereich, hinter einem Halmteiler liegend, befindet. Weiterhin ist ein S-förmig verlaufendes Führungselement vorgesehen, das die Maispflanzen in den hinter dem jeweiligen Halmteiler liegenden Pflückspalt leitet.

Bei einem zweiten Ausführungsbeispiel des gattungsbildenden Standes der Technik, das im Wesentlichen mit dem ersten Ausführungsbeispiel übereinstimmt, ist die jeweilige Position der Schneid- und Häckseleinrichtung verändert; in diesem Fall befindet sie sich nicht in eine längs verlaufenden Ebene mit der Fördereinrichtung. Bei weiteren Ausgestaltungsbeispielen verläuft jeder Pflückspalt schräg zur Längsmittelebene bzw. zur Ernterichtung. Auch in diesem Fall ist im Rahmen jeder Arbeitseinheit ein S-förmig verlaufendes Führungselement vorgesehen, das die Maispflanzen in einen Bereich leitet, der jeweils einem der Halmteiler unmittelbar benachbart ist. Diese Ausgestaltung kann dabei mit einem unterschiedlichen Verlauf der entsprechenden Pflückeinrichtungen ausgeführt sein.

Bei einer Ausführung sind alle Pflückeinrichtungen gleich gerichtet, schräg angeordnet, während sie bei einer weiteren Ausführung beidseitig einer Längsmittelebene gegenläufig, also spiegelbildlich angeordnet sind. Bei letzterer Ausführung verläuft allerdings jeder Pflückspalt und jede der Pflückwalzen vom Eintrittsbereich aus in Richtung der äußeren Begrenzung der jeweiligen Arbeitseinheit. Dabei sind die Schneid- und Häckseleinrichtungen versetzt zu einer durch die jeweilige Arbeitseinheit verlaufenden Längsmittelebene angeordnet, was zur Folge hat, dass die jeweils äußeren Schneid- und Häckseleinrichtungen über die durch äußere Halmteiler vorgegebene Breitenerstreckung des Vorsatzgerätes vorstehen.

Es ist Aufgabe der vorliegenden Erfindung, ein Vorsatzgerät der vorgenannten Gattung derart weiterzubilden, dass zum einen eine optimale Zuführung der stängelförmigen Maispflanzen in die dem Eintrittsbereich nachfolgenden Pflückeinrichtungen realisiert werden kann und zum anderen mittels der Schneid- und Häckseleinrichtung eine verbesserte Schneidwirkung erzielbar ist.

Diese Aufgabe wird, ausgehend vom Oberbegriff des Patentanspruchs 1 in Verbindung mit dessen kennzeichnenden Merkmalen gelöst. Gemäß dem kennzeichnenden Teil des Patentanspruchs 1 soll die äußere Umfangsbahn des zumindest einen Messers einer jeden der Schneid- und Häckseleinrichtungen einen Durchmesser aufweist, der im Wesentlichen mit der durch den Abstand der Halmteiler definierten Breite der Arbeitseinheit übereinstimmt, dass die Drehachse im Bereich einer durch die Arbeitseinheit verlaufenden horizontalen Mittelachse verläuft und dass ein Einzug in den entsprechenden Pflückspalt einer jeden der Arbeitseinheiten im Bereich von deren Mittelachse vorgesehen ist.

Erfindungsgemäß sollen demnach die um die Drehachse rotierenden Messer, die die Maisstängel zunächst bodennah von der Wurzel trennen und anschließend zerhäckseln, mit ihren radialen Enden eine Umfangsbahn beschreiben, die der gesamten Arbeitsbreite der jeweiligen Arbeitseinheit entspricht. Als Arbeitseinheit wird dabei der jeweils zwischen einer Spitze eines Halmteilers und der Spitze des benachbarten Halmteilers liegende Bereich betrachtet. Die Drehachse der Schneid- und Häckseleinrichtung ist dabei mittig der Arbeitseinheit angeordnet. Somit kann die Schneid- und Häckseleinrichtung jeder Arbeitseinheit mit Messern versehen werden, die an ihrem äußeren Abschnitt mit sehr hoher Schnittgeschwindigkeit wirksam sind. Das führt zu einer deutlichen Verbesserung der Schneid- und Häckselqualität der Vorrichtung. Dabei ist von besonderem Vorteil, dass die Maispflanzen im Bereich der Mitte der Arbeitseinheit der entsprechenden Pflückeinrichtung zugeführt werden und somit der Einzug der Arbeitseinheit nur einen geringen Widerstand auf die Maispflanzen ausübt. Die Maispflanzen können somit ohne Behinderung in den Pflückspalt einlaufen.

Demgegenüber werden die Maispflanzen nach der DE 199 59 282 A1 mittels des S-förmigen Führungselements extrem umgelenkt, da bei allen Arbeitseinheiten der Pflückspalt in einem hinter dem einen Halmteiler liegenden Bereich vorgesehen ist (vergleiche Figuren 1 und 4 der DE 199 59 282 A1). Dabei ist außerdem jede der Schneid- und Häckseleinrichtungen derart dimensioniert, dass eine durch die Messer beschriebene Umfangsbahn einen Durchmesser aufweist, der deutlich geringer ist als der Abstand zwischen den einander benachbarten Halmteilern (vergleiche Figur 1 der DE 199 59 282 A1).

Die äußere Umlaufbahn des zumindest einen Messers einer jeden der Schneid- und Häckseleinrichtungen kann innerhalb eines durch den Abstand der Halmteiler definierten Bereichs der Arbeitseinheit liegen, wobei die Pflückspalte und Pflückwalzen beidseitig der Längsmittelebene des Vorsatzgerätes derart zueinander ausgerichtet sind, dass sie mit ihren in Richtung eines Erntegutflusses gesehenen hinteren Enden in Richtung der Längsmittelebene geneigt verlaufen.

Bezogen auf die mittig des Erntevorsatzes verlaufende Längsmittelebene sind demnach die einzelnen Pflückeinrichtungen, die den zwischen den Halmteilern liegenden Arbeitseinheiten zugeordnet sind, spiegelbildlich angeordnet. Dadurch werden die Maisstängel mit den zunächst an ihnen befindlichen Fruchtständen beim Durchlaufen des Pflückspaltes bereits in eine Richtung hin zur Mitte des Erntevorsatzes bewegt. Hierdurch wird der Erntegutfluss, also die anschließende Förderung der Fruchtstände, die mittels der Fördereinrichtung in den Förderbereich eines mit gegenläufigen Schneckenabschnitten versehenen Querförderers erfolgt, noch verbessert. Die Schrägstellung der Pflückeinrichtung führt außerdem dazu, dass ein ausreichender Raum für die Lagerung der Drehachse der Schneid- und Häckseleinrichtung geschaffen wird. Diese Lagerung kann nunmehr in einem Bereich angeordnet sein, dass die Schneid- und Häckseleinrichtung eine vorteilhafte Lage zum Pflückspalt einnimmt, wobei die äußere Umfangsbahn der Messer auf keinen Fall die Gesamtbreite des Erntevorsatzes überschreitet. Anderenfalls müssten zusätzlichen Abdeckungen vorgesehen werden, auf die somit verzichtet werden kann. Das ist insbesondere dann der Fall, wenn die entsprechende Umfangsbahn der Messer mit der jeweiligen Breite der Arbeitseinheit übereinstimmt und dadurch an den Messern maximale Schnittgeschwindigkeiten erzielt werden können.

Wie bereits dargelegt, ist nach der DE 199 59 282 A1 im Zusammenhang mit einer Schrägstellung der Pflückeinrichtungen (vergleiche Figur 9) vorgesehen, dass diese, bezogen auf den Erntegutfluss, schräg nach außen geneigt sind. Dadurch ergibt sich der wesentliche Nachteil, dass die am Erntevorsatz vorgesehenen äußeren Schneid- und Häckseleinrichtungen den Erntevorsatz hinsichtlich seiner Breite überragen und die Fruchtstände aufgrund der Ausrichtung der Pflückspalte entgegen der Förderrichtung des Querförderers bewegt werden. Schließlich sind die Schneid- und Häckseleinrichtungen mit ihren jeweiligen Drehachsen in einem hinter dem Halmteiler liegenden Bereich und derart zum jeweiligen Pflückspalt angeordnet, dass nur eine Schneid- und Häckselwirkung am Ende des Pflückspalts auftritt, so dass keine ausreichende Zerkleinerung der Maisstängel erzielt werden kann.

In weiterer Ausgestaltung der Lösung des Patentanspruchs 1 sollen äußere Umlaufbahnen von Messern der Schneid- und Häckseleinrichtungen, die den beiden äußeren Arbeitseinheiten zugeordnet sind, innerhalb einer durch einen Abstand äußerer Halmteiler definierten gesamten Arbeitsbreite des Vorsatzgerätes liegen. Folglich wird die Breite des Vorsatzgerätes durch eventuell erforderliche Schutzabdeckungen, die anderenfalls zwingend erforderlich wären, nicht gegenüber seiner eigentlichen Arbeitsbreite vergrößert.

Weiterhin ist ebenfalls im Zusammenhang mit den Merkmalen des Patentanspruchs 1 vorgesehen, dass die Pflückspalte und Pflückwalzen beidseitig einer Längsmittelebene des Vorsatzgerätes derart zueinander ausgerichtet sind, dass sie mit ihren, in Richtung eines Erntegutflusses gesehen, hinteren Enden in Richtung der Längsmittelebene geneigt verlaufen. Dadurch ergibt sich eine Anordnung, bei der die Messer mit ihren Umlaufbahnen vollständig den Arbeitsbereich der Arbeitseinheit abdecken. Außerdem sind dabei vertikale Drehachsen der Schneid- und Häckseleinrichtungen jeweils, bezogen auf die Breite der Arbeitseinheit, mittig angeordnet. Die Arbeitseinheiten weisen ebenfalls jeweils einen mittigen Einzug auf, wobei die Maispflanzen von diesem aus in einen in Richtung der Längsmittelebene des Vorsatzgerätes geneigten Pflückspalt überführt werden. Dadurch wird ein Erntegutfluss, also eine Bewegung der von den Maisstängeln mittels der Pflückeinrichtung getrennten Fruchtstände in Richtung der Mitte des Vorsatzgerätes herbeigeführt, so dass diese anschließend von den Schneckengängen des Querförderers weiter in dieser Richtung transportiert werden können. Dabei ist weiterhin vorgesehen, dass jeder der Pflückspalte unter einem spitzen Winkel α zur Längsmittelebene des Vorsatzgerätes verläuft. Dieser Winkel α kann beispielsweise etwa 30°betragen.

Der Erntegutfluss in Richtung der Pflückeinrichtungen kann dadurch verbessert werden, dass in jedem einer Pflückeinrichtung zugeordneten Einzugsbereich des Vorsatzgerätes paarweise gegenläufig angetriebene, jeweils um eine im Wesentlichen vertikale Achse rotierende Fördersterne vorgesehen sind. Diese Fördersterne erfassen über die gesamte Arbeitsbreite der Arbeitseinheit die Maispflanzen an ihren Stängeln und führen diese gezielt dem zwischen den Pflückwalzen liegenden Pflückspalt zu. Dadurch kann ein stetiger Erntegutfluss erzielt werden.

Vorzugsweise sind dabei die Fördersterne als außenverzahnte kreisförmige Scheiben ausgebildet. Die Scheiben können derart phasenversetzt zueinander betrieben werden, dass sie eine Position für einen Zahneingriff einnehmen. Damit ist gemeint, dass die radial zueinander beabstandeten Scheiben derart angetrieben werden, dass jeweils ein Zahn der einen Scheibe in Richtung eines Zahneingriffs weist. Über den jeweiligen Zahneingriff erfolgt eine Mitnahme der Maisstängel, wobei diese über dem Zahnkopf der benachbarten Scheibe in dieser Position gehalten werden.

In weiterer Ausgestaltung der Erfindung sollen die Pflückwalzen einer jeden Pflückeinrichtung mit unterschiedlichen Längen ausgebildet und in ihren Einzugsbereichen mit einer Einzugsschnecke versehen sein. Bei der vorstehend erläuterten schrägen Anordnung der jeweiligen Pflückeinrichtung soll die Einzugsschnecke der jeweils in Bezug auf eine Längsmittelebene der Arbeitseinheit außenliegenden Pflückwalze gegenüber der Einzugsschnecke der innenliegenden Pflückwalze des Pflückwalzenpaares verlängert ausgebildet sein. Dieser verlängerten Einzugsschnecke wird aufgrund der Vorwärtsbewegung des Erntevorsatzes, eventuell unterstützt durch die rotierenden Fördersterne, der Maisstängel zugeführt und gelangt aufgrund der Förderwirkung dieser verlängerten Einzugsschnecke bis in den Bereich, in welchem sich die Einzugsschnecken beider Pflückwalzen gegenüberstehen.

Weiterhin sollen die Fördereinrichtungen der einzelnen Arbeitseinheiten jeweils als Nabe mit davon ausgehenden gekrümmt verlaufenden Förderzinken ausgebildet sein. Durch die schräg verlaufenden Pflückeinrichtungen ergibt sich ein zusätzlicher Bauraum für eine entsprechende Lagerung der Fördereinrichtungen. Darüber hinaus können die Fördereinrichtungen in Bezug auf die schräg verlaufenden Pflückeinrichtungen derart angeordnet sein, dass der jeweilige Pflückspalt sehnenartig zu einem die Förderzinken umschließenden Hüllkreis verläuft. Dadurch ergibt sich eine vorteilhafte Förderwirkung der Fördereinrichtungen. Natürlich besteht auch die Möglichkeit, die Fördereinrichtungen als Ketten- oder Bandförderer auszubilden, bei denen zwei Ketten oder Bänder, die gegenläufig angetrieben werden, in der Ebene des Pflückspaltes verlaufen.

Schließlich ist im Zusammenhang mit einer schrägen Anordnung der Pflückeinrichtungen vorgesehen, dass die mittig des Erntevorsatzes, beiderseits der Längsmittelebene angeordneten Fördersterne nach oben von einer Abdeckung verschlossen sind, wobei die Abdeckung mit einer im Wesentlichen dreieckigen Außenkontur ausgebildet ist und an ihren den Pflückeinrichtungen benachbarten Rändern Führungsabschnitte eines Führungskanals für die Maisstängel bildet. Die übrigen beidseitig der Längsmittelebene des Vorsatzgerätes angeordneten können, ausgehend von den Halmteilern, durch Abdeckungen mit einer einem Parallelogramm ähnlichen Außenkontur nach oben abgedeckt sein.

Die Erfindung ist nicht auf die angegebene Kombination der Merkmale des unabhängigen Anspruchs 1 und der von diesen Patentansprüchen abhängigen Patentansprüche beschränkt. Es ergeben sich darüber hinaus Möglichkeiten, einzelne Merkmale, soweit sie aus den Patentansprüchen, den Vorteilsangaben zu den Patentansprüchen, der nachfolgenden Beschreibung des Ausführungsbeispiels oder zumindest aus den Zeichnungen hervorgehen, miteinander zu kombinieren. Die Bezugnahme der Patentansprüche auf die Zeichnung durch entsprechende Verwendung von Bezugszeichen soll den Schutzumfang der Patentansprüche nicht beschränken.

Zur weiteren Erläuterung der Erfindung wird auf die Zeichnung verwiesen, in der ein Ausführungsbeispiel vereinfacht dargestellt ist. Es zeigen:
- Figur 1: eine perspektivische Ansicht eines erfindungsgemäßen Erntevorsatzes auf seine obere Seite,
- Figur 2: eine Teilansicht eines Erntevorsatzes in Draufsicht ohne die in Figur 1 dargestellten Abdeckungen der Pflückeinrichtungen und der Förderelemente, und
- Figur 3: eine perspektivische Teilansicht des Erntevorsatzes der Figuren 1 und 2 auf seine untere Seite.

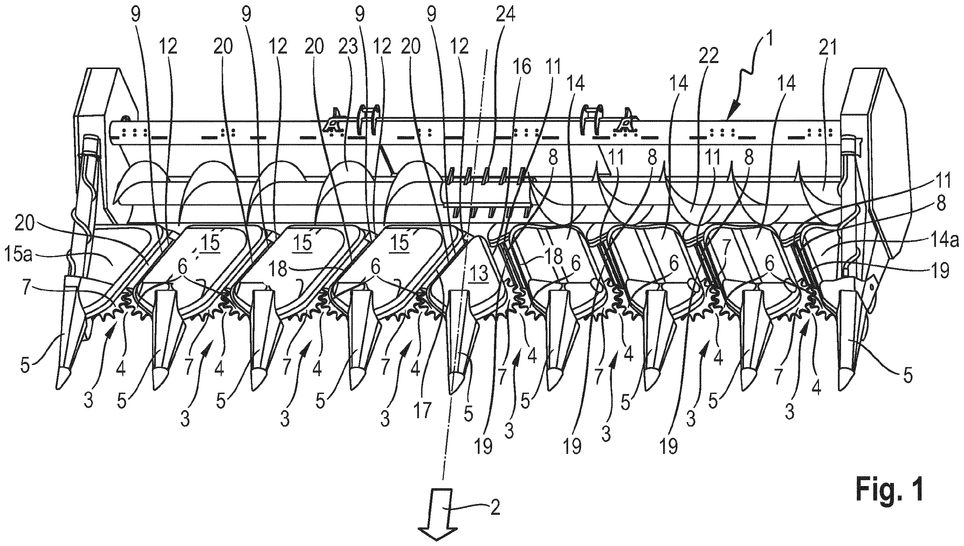

In der Figur 1 ist mit 1 ein Vorsatzgerät zum Ernten von Körnermais bezeichnet, das an einen nicht näher dargestellten Schrägförderer eines ebenfalls nicht dargestellten selbstfahrenden Mähdreschers kuppelbar ist. Über den entsprechenden Schrägförderer werden die von Maispflanzen entfernten Maiskolben einem Dreschwerk dieses Mähdreschers zugeführt, in welchem die Maiskörner dann während eines Dreschvorgangs aus den Maiskolben gelöst werden. Das Vorsatzgerät 1 wird während des Erntevorgangs in einer durch einen Pfeil 2 verdeutlichten Fahrtrichtung betrieben. Über seinen gesamten Arbeitsbereich weist das Vorsatzgerät insgesamt acht Arbeitseinheiten 3 auf, deren Eintrittsbereiche 4 durch Halmteiler 5 voneinander getrennt sind. Die Anzahl der Arbeitseinheiten 3 kann von dem in Fig. 1 dargestellten Ausführungsbeispiel nach oben und unten abweichen.

Wie weiterhin aus der Figur 1 hervorgeht, sind in den Eintrittsbereichen 4 jeweils paarweise zusammenwirkende Fördersterne 6 und 7 angeordnet, die während eines Erntevorgangs die Maispflanzen an den noch mit den Wurzeln verbundenen Maisstängeln erfassen und anschließend die Maisstängel in die mittig der Arbeitseinheiten 3 vorgesehenen Eintrittsbereiche 4 bewegen. Ausgehend von den jeweiligen Eintrittsbereichen 4 werden die Maisstängel, die in diesem Zustand noch die Maiskolben aufnehmen, in erste Führungskanäle 8 oder zweite Führungskanäle 9 gefördert.

Die ersten Führungskanäle 8 und die zweiten Führungskanäle 9 verlaufen jeweils schräg zu der durch den Pfeil 2 verdeutlichten Fahrtrichtung und somit auch schräg zu einer Längsmittelebene 10 des Vorsatzgerätes 1. Dabei sind hintere Enden 11 der ersten Führungskanäle 8 sowie hintere Enden 12 der zweiten Führungskanäle 9 jeweils in Richtung der Längsmittelebene 10 des Vorsatzgerätes 1 geneigt, so dass sich, bezogen auf die Längsmittelebene 10 ein spiegelbildlicher Verlauf der ersten Führungskanäle 8 und der zweiten Führungskanäle 9 ergibt. Die hinteren Enden 11 und 12 der Führungskanäle 8 und 9 nehmen die gleiche Lage ein wie nachfolgend noch erläuterte Pflückeinrichtungen.

Weiterhin ist im Bereich der Längsmittelebene 10 eine die Fördersterne 6, 7 teilweise nach oben umschließende Abdeckung 13 vorgesehen, die eine im Wesentlichen dreieckige Außenkontur aufweist. Dabei ist allerdings ein in Richtung des entsprechenden mittleren Halmteilers 5 weisender Schenkel gekrümmt ausgebildet. Den übrigen Halmteilern 5 sind Abdeckungen 14 oder 15 zugeordnet, wobei die Abdeckungen 14 und 15 etwa die Kontur eines Parallelogramms aufweisen. Außerdem sind im Bereich der an den äußersten Begrenzungen verlaufenden Halmteiler 5 äußere Abdeckungen 14a und 15a vorgesehen.

Dabei weist die mittige Abdeckung 13 Ränder 16 und 17 auf, die gemeinsam mit Rändern 18 der jeweilig benachbarten Abdeckungen 14 beziehungsweise 15 die ersten Führungskanäle 8 und die zweiten Führungskanäle 9 begrenzt. Die übrigen Führungskanäle 8 und 9 werden durch entsprechende Ränder der einzelnen Abdeckungen 14 und 15 begrenzt. Innerhalb der entsprechenden Führungskanäle 8 und 9 sind, gleichgerichtet mit diesen verlaufend, Pflückeinrichtungen 19 und 20 angeordnet. Diese Pflückeinrichtungen 19 und 20 dienen dazu, die Maiskolben von den Maisstängeln zu entfernen und einem ebenfalls in der Figur 1 dargestellten Querförderer 21, der mit links- oder rechtsgewundenen Schneckengängen 22 beziehungsweise 23 versehen ist, zuzuführen. Diese Schneckengänge 22 und 23 des Querförderers 21 ziehen das Erntegut, also die Maiskolben mittig zusammen, woraufhin mittels an dem Querförderer 21 vorgesehener radialer Stifte 24 die Maiskolben über eine nicht dargestellte Öffnung in der Rückwand des Vorsatzgerätes 1 dem Schrägförderer zugeführt werden.

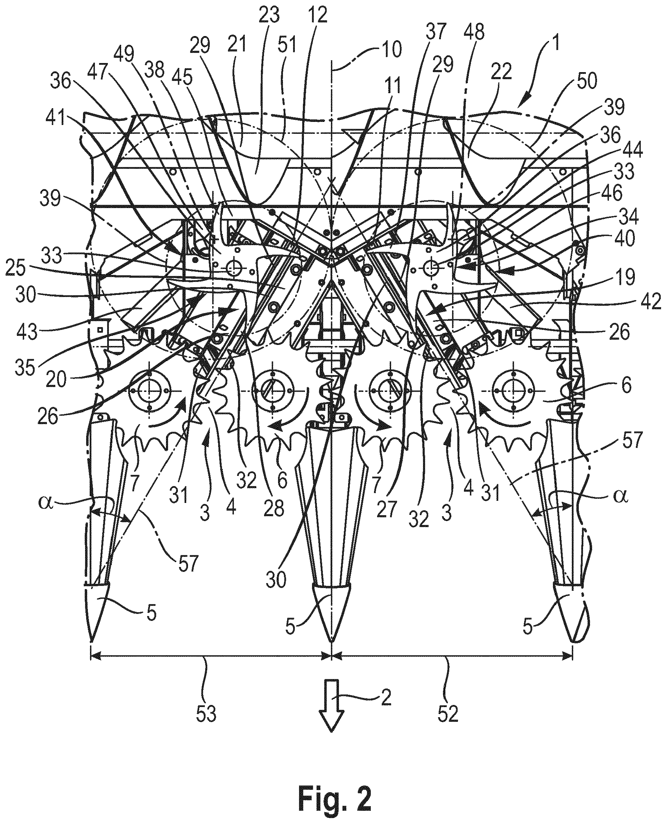

In der Figur 2 ist im Rahmen einer Draufsicht eine im Maßstab gegenüber Figur 1 vergrößerte Ansicht des Vorsatzgerätes 1 dargestellt, die zwei beidseitig der Längsmittelebene 10 liegende Arbeitseinheiten 3 zeigt. Zum besseren Verständnis der Anordnung der Pflückeinrichtungen 19 und 20 und der Paare von Fördersternen 6 und 7 sowie weiterer Bauelemente dieser Anordnung sind im dargestellten Bereich die Abdeckungen 13, 14 und 15 entfernt. Die Pflückeinrichtungen 19 und 20 weisen erste Pflückbleche 25 und zweite Pflückbleche 26 auf, welche derart zueinander beabstandet sind, dass zwischen ihnen jeweils ein der ersten Pflückeinrichtung 19 oder der zweiten Pflückeinrichtung 20 zugeordneter Pflückspalt 27 beziehungsweise 28 gebildet wird. Wie aus der Darstellung hervorgeht, verlaufen diese Pflückspalte 27 und 28 beidseitig der Längsmittelebene 10 mit einer Neigung ihres jeweiligen hinteren Endes in Richtung der Längsmittelebene 10, so dass sie gegenüber dieser unter einem Winkel α von etwa 30°(dreißig Grad) verlaufen. An den weiteren Arbeitseinheiten 3 sind entsprechend ausgebildete Pflückeinrichtungen vorgesehen, wobei deren Pflückspalte, die sich auf einer Hälfte des Vorsatzgerätes 1 befinden, jeweils parallel zueinander und unter dem vorgenannten Winkel α zur Längsmittelebene 10 verlaufen.

Unterhalb der Pflückbleche 25 und 26 sind erste Pflückwalzen 29 und zweite Pflückwalzen 30 paarweise angeordnet und radial zueinander beabstandet. Dabei weist die jeweilige erste Pflückwalze 29 eine lange Einzugsschnecke 31 auf, während eine Einzugsschnecke 32 der zweiten Pflückwalze 30 im Vergleich zu dieser verkürzt ausgebildet ist. Jeder der Fördersterne 6 wird im Uhrzeigersinn angetrieben, während die Fördersterne 7 eine Drehrichtung im Gegenuhrzeigersinn aufweisen. Das heißt, die beiden im Bereich des mittigen Halmteilers 5 angeordneten Fördersterne 6 und 7 werden gegenläufig angetrieben. Daher gelangen die Stängel der im Eintrittsbereich 4 zugeführten Maispflanzen mit Hilfe der Fördersterne 6 und 7 zunächst in die verlängert ausgebildeten Einzugsschnecken 31, die sie so weit innerhalb des jeweiligen Führungskanals 8 oder 9 transportieren, bis sie auch von den verkürzt ausgebildeten Einzugsschnecken 32 erfasst werden und dann beide Einzugsschnecken 31 und 32 die Maispflanze in den jeweiligen Pflückspalt 27 beziehungsweise 28 fördern.

Oberhalb der Pflückbleche 25, 26 sind auf vertikal verlaufenden Antriebsachsen 33 angeordnete Fördereinrichtungen 34 und 35 angeordnet, die jeweils eine Nabe 36 und von dieser radial verlaufenden Förderzinken 37 beziehungsweise 38 aufweisen. Wie aus der Figur 2 hervorgeht, sind diese Förderzinken 37 und 38 gekrümmt ausgebildet und weisen einen Hüllkreis 39 auf, zu dem der jeweilige Pflückspalt 27 beziehungsweise 28 sehnenartig verläuft. Die Fördereinrichtungen 34 und 35, die natürlich auch an allen anderen Arbeitseinheiten 3 in entsprechender Weise vorgesehen sind, sorgen dafür, dass die mittels der Pflückbleche 25 und 26 sowie der Pflückwalzen 29 und 30 von den Maisstängeln entfernten Maiskolben in Richtung des Querförderers 21 gefördert werden.

Weiterhin sind in einer Ebene unterhalb der Pflückwalzen 29 und 30 Schneid- und Häckseleinrichtungen 40 und 41 vorgesehen, die die durch die Pflückspalte 27 und 28 gezogenen Maisstängel bodennah abtrennen und in kleine Bestandteile häckseln. Von den Schneid- und Häckseleinrichtungen 40 und 41 sind in der Darstellung nur Messer 42 und 43, Naben 44 und 45 sowie Lagerböcke 46 und 47 sichtbar. Die Messer 42 und 43 beschreiben mit ihren radial äußeren Enden um eine in der Figur 2 nicht näher dargestellte vertikale Drehachse eine kreisförmige Umfangsbahn 50 beziehungsweise 51, deren Mittelpunkte mit 48 beziehungsweise 49 bezeichnet sind. Dabei weist diese jeweilige äußere Umfangsbahn 50 oder 51 einen Durchmesser auf, der mit der jeweiligen Arbeitsbreite 52 beziehungsweise 53 der entsprechenden Arbeitseinheiten 3 übereinstimmt.

Folglich ist auch jeder Mittelpunkt 48 beziehungsweise 49 der entsprechenden Drehachsen mittig zur entsprechenden Arbeitsbreite 52 oder 53 der Arbeitseinheit 3 angeordnet, das heißt, jeder dieser Mittelpunkte 48 und 49 liegt auf einer durch die Arbeitseinheit 3 gelegten horizontalen Mittelachse 57. Daraus ergibt sich im Zusammenhang mit Figur 1, dass die den beiden äußeren Arbeitseinheiten 3 des Vorsatzgerätes 1 zugeordneten Schneid- und Häckseleinrichtungen 40 und 41 nicht über die Arbeitsbreite des Vorsatzgerätes 1 vorstehen. Aufgrund der Länge der Messer 42 und 43 weisen diese in einem Bereich, in welchem sie mit dem entsprechenden Pflückspalt 27 beziehungsweise 28 zusammenwirken, eine hohe Schnittgeschwindigkeit auf, wobei zu diesem Zweck der entsprechende Pflückspalt 27 beziehungsweise 28 zu der durch die äußeren Umfangsbahnen 50 und 51 jeweils beschriebenen Kreis sehnenartig verlaufen.

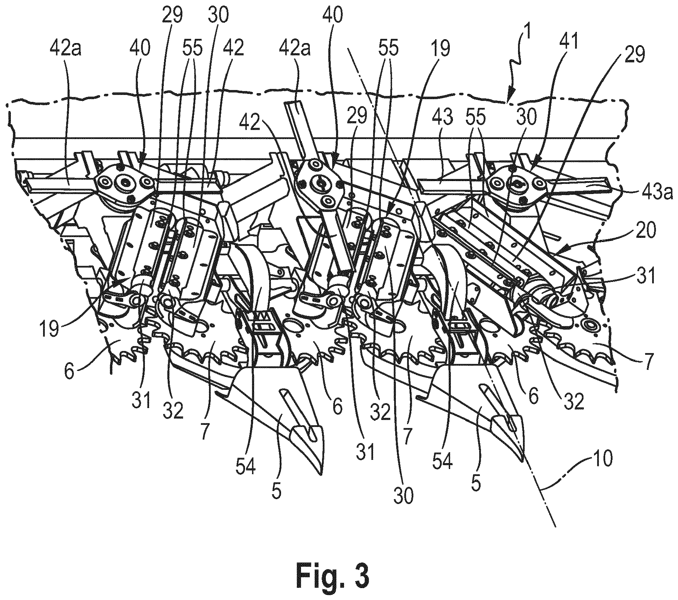

In der Figur 3 ist eine perspektivische Teilansicht des Vorsatzgerätes 1 von seiner Unterseite dargestellt. Diese Ansicht betrifft ebenfalls einen Bereich des Vorsatzgerätes 1 im Bereich eines in der Längsmittelebene 10 liegenden Halmteilers 5. Am Rahmen des Vorsatzgerätes 1 sind auf der Unterseite Kufen 54 zur Führung des Vorsatzgerätes 1 auf dem Boden des abzuerntenden Feldes angeordnet. Die ersten und zweiten Pflückwalzen 29 und 30, die sich aufgrund der unterschiedlich langen Einzugsschnecken 31 und 32 in ihrer Gesamtlänge unterscheiden, weisen an ihrem Außenumfang Mitnahmerippen 55 auf, die derart phasenversetzt zueinander sind, dass sie die Maisstängel gemeinsam erfassen und vertikal in Richtung des Bodens ziehen können. Aus der Darstellung geht im Übrigen hervor, dass die Einzugsschnecken 31 und 32 unterschiedlich lang ausgebildet sind.

Die Naben 44 und 45 der Schneid- und Häckseleinrichtungen 40 und 41 sind gemeinsam mit den Messern 42, 42a und Messer 43, 43a um 90°phasenversetzt auf vertikalen Drehachsen angeordnet, über die der Messerantrieb erfolgt. Bei einer einzelnen Absicherung der Schneid- und Häckseleinrichtung 40, 41 gegen eine Überlastung ist die Stellung der Messern 42, 42a und Messern 43, 43a zueinander beliebig. Auch aus der Figur 3 geht hervor, dass zum einen die Pflückeinrichtungen 19 und 20 beidseitig der Längsmittelebene 10 gegenläufig geneigt sind. Bezogen auf die Längsmittelebene 10 verlaufen sie in etwa wie Schenkel eines gleichschenkligen Dreiecks.

Die Figur 3 zeigt im Übrigen, dass auf Grund der Schrägstellung der Pflückeinrichtungen 19 und 20 ein Freiraum geschaffen wird, um die Schneid- und Häckseleinrichtungen 40 und 41 mittig der jeweiligen Arbeitseinheit 3 anzuordnen. Weiterhin ist zu erkennen, dass die Messer 42 und 43 der Schneid- und Häckseleinrichtungen 40 und 41 sich derart radial erstrecken, dass sie eine maximale Länge und damit eine hohe Schnittgeschwindigkeit aufweisen und funktionell jeweils die Arbeitsbreite 52 beziehungsweise 53 einer jeden der Arbeitseinheiten 3 abdecken.

### Bezugszeichen

- 1: Vorsatzgerät
- 2: Pfeil
- 3: Arbeitseinheiten
- 4: Eintrittsbereich
- 5: Halmteiler
- 6: Fördersterne
- 7: Fördersterne
- 8: erste Führungskanäle
- 9: zweite Führungskanäle
- 10: Längsmittelebene
- 11: hinteres Ende von 8

- 12: hinteres Ende von 9
- 13: mittige Abdeckung
- 14: Abdeckungen
- 14a: äußere Abdeckung
- 15: Abdeckungen
- 15a: äußere Abdeckung
- 16: Rand von 13
- 17: Rand von 13
- 18: Rand von 14 oder 15
- 19: Pflückeinrichtung
- 20: Pflückeinrichtung
- 21: Querförderer
- 22: nach links fördernder Schneckengang
- 23: nach rechts fördernder Schneckengang
- 24: radiale Stifte von 21
- 25: erste Pflückbleche
- 26: zweite Pflückbleche
- 27: Pflückspalt von 18
- 28: Pflückspalt von 19
- 29: erste Pflückwalzen
- 30: zweite Pflückwalzen
- 31: lange Einzugsschnecke von 27
- 32: kurze Einzugsschnecke von 30
- 33: Antriebsachse
- 34: Fördereinrichtungen
- 35: Fördereinrichtungen
- 36: Nabe
- 37: Förderzinken
- 38: Förderzinken
- 39: Hüllkreis von 35 oder 36
- 40: Schneid- und Häckseleinrichtung
- 41: Schneid- und Häckseleinrichtung
- 42: Messer
- 42a: Messer
- 43: Messer
- 43a: Messer
- 44: Naben
- 45: Naben
- 46: Lagerbock
- 47: Lagerbock
- 48: Mittelpunkt Drehachse
- 49: Mittelpunkt Drehachse
- 50: äußere Umfangsbahnen
- 51: äußere Umfangsbahnen
- 52: Arbeitsbreite
- 53: Arbeitsbreite
- 54: Kufen
- 55: Mitnahmerippen
- 57: Mittelachse von 3

## Patentansprüche

1. Vorsatzgerät (1) für einen selbstfahrenden Mähdrescher zum Ernten von Mais mit mehreren Arbeitseinheiten (3) zugeordnete Pflückeinrichtungen (19, 20), Fördereinrichtungen (34, 35) und Schneid- beziehungsweise Häckseleinrichtungen (40, 41), wobei die Pflückeinrichtung (19 oder 20) einer Arbeitseinheit (3) aus einem zwischen Pflückblechen (25 und 26) gebildeten Pflückspalt (27, 28) und paarweise unterhalb des Pflückspaltes (27, 28) angeordneten, gegenläufig angetriebenen Pflückwalzen (29 und 30) besteht, und wobei die jeweilige Schneid- beziehungsweise Häckseleinrichtung (40, 41) zumindest ein Messer (42, 42a, 43, 43a) aufweist, welches um eine im Wesentlichen vertikal verlaufende Drehachse rotiert und dessen radiale Erstreckung in einer unterhalb der Pflückwalzen (29 und 30) verlaufenden Ebene angeordnet ist, **dadurch gekennzeichnet, dass** eine äußere Umfangsbahn (50, 51) des zumindest einen bodennah radial von der Drehachse ausgehenden Messers (42, 42a, 43, 43a) einer jeden der Schneid- und Häckseleinrichtungen (40, 41) einen Durchmesser aufweist, der im Wesentlichen mit der durch den Abstand von Halmteilern (5) definierten Arbeitsbreite (52, 53) der Arbeitseinheit (3) übereinstimmt, dass die Drehachse im Bereich einer durch die Arbeitseinheit (3) verlaufenden horizontalen Mittelachse (57) verläuft und dass ein Eintrittsbereich (4) in den entsprechenden Pflückspalt (27, 28) einer jeden der Arbeitseinheiten (3) im Bereich von deren Mittelachse (57) vorgesehen ist.

2. Vorsatzgerät nach Patentanspruch 1, **dadurch gekennzeichnet, dass** äußere Umlaufbahnen (50, 51) von Messern (42, 42a, 43, 43a) der Schneid- und Häckseleinrichtungen (40, 41), die den beiden äußeren Arbeitseinheiten (3) des Vorsatzgerätes (1) zugeordnet sind, innerhalb einer durch einen Abstand äußerer Halmteiler (5) definierten gesamten Arbeitsbreite des Vorsatzgerätes (1) liegen.

3. Vorsatzgerät nach Patentanspruch 1, **dadurch gekennzeichnet, dass** die Pflückspalte (27, 28) und Pflückwalzen (29 und 30) beidseitig einer Längsmittelebene (10) des Vorsatzgerätes (1) derart zueinander ausgerichtet sind, dass sie mit ihren, in Richtung eines Erntegutflusses gesehen, hinteren Enden (11, 12) in Richtung der Längsmittelebene (10) geneigt verlaufen.

4. Vorsatzgerät nach Patentanspruch 3, **dadurch gekennzeichnet, dass** jeder der Pflückspalte (27, 28) unter einem spitzen Winkel α zur Längsmittelebene (10) des Vorsatzgerätes (1) verläuft.

5. Vorsatzgerät nach Patentanspruch 3, **dadurch gekennzeichnet, dass** in jedem einer Pflückeinrichtung (19 und 20) zugeordneten Eintrittsbereich (4) des Vorsatzgerätes (1) paarweise gegenläufig angetriebene, jeweils um eine im Wesentlichen vertikale Achse rotierende Fördersterne (6 und 7) vorgesehen sind.

6. Vorsatzgerät nach Patentanspruch 5, **dadurch gekennzeichnet, dass** die Fördersterne (6 und 7) als außen verzahnte kreisförmige Scheiben ausgebildet sind.

7. Vorsatzgerät nach Patentanspruch 5, **dadurch gekennzeichnet, dass**, die Scheiben derart phasenversetzt zueinander betrieben werden, dass sie eine Position für einen Zahneingriff einnehmen.

8. Vorsatzgerät nach Patentanspruch 5, **dadurch gekennzeichnet, dass** die Pflückwalzen (29, 30) einer jeden Pflückeinrichtung (19, 20) mit unterschiedlicher Länge ausgebildet und an ihrem jeweiligen den Fördersternen (6 und 7) zugewandten Ende mit einer Einzugsschnecke (31, 32) versehen sind.

9. Vorsatzgerät nach Patentanspruch 8, **dadurch gekennzeichnet, dass** die Einzugsschnecke (31) der jeweils in Bezug auf die Längsmittelebene außen liegenden Pflückwalze (25) gegenüber der Einzugsschnecke (32) der anderen Pflückwalze (26) des Pflückwalzenpaares (29 und 30) verlängert ausgebildet ist.

10. Vorsatzgerät nach Patentanspruch 1, **dadurch gekennzeichnet, dass** die Fördereinrichtungen (34, 35) als Nabe (36) mit davon ausgehenden, gekrümmt verlaufenden Förderzinken (37, 38) ausgebildet sind.

11. Vorsatzgerät nach Patentanspruch 1, **dadurch gekennzeichnet, dass** die Fördereinrichtungen(34, 35) als Nabe (36) mit davon ausgehenden Förderzinken (37, 38) ausgebildet sind, wobei die jeweilige Pflückeinrichtung (19, 20) sehnenartig zu einem die Förderzinken (37, 38) umschließenden Hüllkreis verlaufen.

12. Vorsatzgerät nach Patentanspruch 2, **dadurch gekennzeichnet, dass** die mittig des Erntevorsatzes (1), beiderseits der Längsmittelebene (10) angeordneten Fördersterne (6 und 7) nach oben von einer Abdeckung (13) umschlossen sind, wobei die Abdeckung (13) mit einer im Wesentlichen dreieckigen Außenkontur ausgebildet ist und an ihren den Pflückeinrichtungen (19 und 20) benachbarten Rändern (16 und 17) Führungsabschnitte eines Führungskanals (8, 9) für die Maisstengel bildet.

## Claims

1. A front attachment (1) for a self-propelled combine harvester for harvesting maize, having picking devices (19, 20), conveying devices (34, 35) and cutting or chopping devices (40, 41) associated with a plurality of working units (3), wherein the picking device (19 or 20) of a working unit (3) consists of a picking gap (27, 28) formed between picking plates (25 and 26) and pairs of picking rollers (29 and 30) which are driven in opposite directions to each other disposed below the picking gap (27, 28), and wherein the respective cutting or chopping device (40, 41) has at least one knife (42, 42a, 43, 43a) which rotates about an essentially vertically positioned axis of rotation and has a radial extent which is disposed in a plane lying below the picking rollers (29 and 30), **characterized in that** an outer peripheral track (50, 51) of the at least one knife (42, 42a, 43, 43a) of each of the cutting and chopping devices (40, 41) extending close to the ground and radially from the axis of rotation has a diameter which substantially coincides with the working width (52, 53) of the working unit (3) defined by the separation of crop dividers (5), **in that** the axis of rotation passes through the region of a horizontal central axis (57) passing through the working unit (3), and **in that** an inlet region (4) into the relevant picking gap (27, 28) of each of the working units (3) is provided in the region of its central axis (57).

2. The front attachment according to claim 1, **characterized in that** outer peripheral tracks (50, 51) of knives (42, 42a, 43, 43a) of the cutting and chopping devices (40, 41) which are associated with the two outer working units (3) of the front attachment (1) lie within a total working width of the front attachment (1) defined by the separation of outer crop dividers (5).

3. The front attachment according to claim 1, **characterized in that** the picking gap (27, 28) and picking rollers (29, 30) are orientated on either side of a longitudinal central plane (10) of the front attachment (1) in a manner such that their rear ends (11, 12) seen in the direction of a flow of a crop are inclined in the direction of the longitudinal central plane (10).

4. The front attachment according to claim 3, **characterized in that** each of the picking gaps (27, 28) is positioned at an acute angle α to the longitudinal plane (10) of the front attachment (1).

5. The front attachment according to claim 3, **characterized in that** in each inlet region (4) of the front attachment (1) associated with a picking device (19 and 20), conveyor stars (6 and 7) are provided which are respectively driven in pairs in rotation in opposite directions, respectively about a substantially vertical axis.

6. The front attachment according to claim 5, **characterized in that** the conveyor stars (6 and 7) are configured as externally toothed circular disks.

7. The front attachment according to claim 5, **characterized in that** the disks are operated with respect to each other in a phase-offset manner such that they take up a position so that the teeth can mesh.

8. The front attachment according to claim 5, **characterized in that** the picking rollers (29, 30) of each picking device (19, 20) are configured with different lengths and each end facing the conveyor stars (6 and 7) is provided with an intake auger (31, 32).

9. The front attachment according to claim 8, **characterized in that** the intake auger (31) of each picking roller (25) lying outside with respect to the longitudinal central plane is elongated in configuration compared with the intake auger (32) of the other picking roller (26) of the pair of picking rollers (29 and 30).

10. The front attachment according to claim 1, **characterized in that** the conveyor devices (34, 35) are configured as a hub (36) with angled conveyor tines (37, 38) extending outwardly therefrom.

11. The front attachment according to claim 1, **characterized in that** the conveyor devices (34, 35) are configured as a hub (36) with conveyor tines (37, 38) extending outwardly therefrom, wherein the respective picking device (19, 20) makes a chord with respect to a circular envelope encompassing the conveyor tines (37, 38).

12. The front attachment according to claim 2, **characterized in that** the conveyor stars (6 and 7) disposed centrally of the harvester header (1) on either side of the longitudinal central plane (10) are closed from above by a cover (13), wherein the cover (13) is configured with a substantially triangular outer contour and at its edges (16 and 17) adjacent to the picking devices (19 and 20) forms guide sections of a guide channel (8, 9) for the stalks of maize.

## Revendications

1. Outil frontal (1) pour une moissonneuse-batteuse automotrice pour la récolte de maïs, comprenant plusieurs équipements de cueillage (19, 20) associés à des unités de travail (3), des équipements d'amenée (34, 35) et des équipements de coupe, respectivement de hachage (40, 41), l'équipement de cueillage (19 ou 20) d'une unité de travail (3) étant constitué d'une fente de cueillage (27, 28) formée entre des tôles de cueillage (25 et 26) et de rouleaux cueilleurs (29 et 30) entraînés en sens opposés, disposés par paires sous la fente de cueillage (27, 28), et l'équipement de coupe, respectivement de hachage respectif (40, 41) comportant au moins un couteau (42, 42a, 43, 43a) qui tourne autour d'un axe de rotation s'étendant sensiblement verticalement et dont l'extension radiale se trouve dans un plan s'étendant sous les rouleaux cueilleurs (29 et 30), **caractérisé en ce qu'**une trajectoire circonférentielle extérieure (50, 51) du au moins un couteau (42, 42a, 43, 43a), partant radialement de l'axe de rotation près du sol, de chacun des équipements de coupe et de hachage (40, 41) présente un diamètre qui coïncide sensiblement avec la largeur de travail (52, 53) de l'unité de travail (3) définie par l'écartement des diviseurs (5), **en ce que** l'axe de rotation s'étend dans la zone d'un axe médian horizontal (57) traversant l'unité de travail (3), et **en ce qu'**une zone d'entrée (4) dans la fente de cueillage correspondante (27, 28) de chacune des unités de travail (3) est prévue dans la zone de leur axe médian (57).

2. Outil frontal selon la revendication 1, **caractérisé en ce que** des trajectoires circonférentielles extérieures (50, 51) de couteaux (42, 42a, 43, 43a) des équipements de coupe et de hachage (40, 41), qui sont associés aux deux unités de travail extérieures (3) de l'outil frontal (1), se trouvent à l'intérieur d'une largeur de travail totale de l'outil frontal (1) définie par un écartement de diviseurs extérieurs (5).

3. Outil frontal selon la revendication 1, **caractérisé en ce que** les fentes de cueillage (27, 28) et les rouleaux cueilleurs (29 et 30) sont orientés l'un par rapport à l'autre de part et d'autre d'un plan médian longitudinal (10) de l'outil frontal (1), de façon qu'ils s'étendent, par leurs extrémités arrière (11, 12), vues dans la direction du flux de produit récolté, de manière inclinée en direction du plan médian longitudinal (10).

4. Outil frontal selon la revendication 3, **caractérisé en ce que** chacune des fentes de cueillage (27, 28) s'étend selon un angle aigu α par rapport au plan médian longitudinal (10) de l'outil frontal (1).

5. Outil frontal selon la revendication 3, **caractérisé en ce que** dans chaque zone d'entrée (4) de l'outil frontal (1) associée à un équipement de cueillage (19 et 20) sont prévues des étoiles d'alimentation (6, et 7) entraînées par paires en sens opposés, tournant chacune autour d'un axe sensiblement vertical.

6. Outil frontal selon la revendication 5, **caractérisé en ce que** les étoiles d'alimentation (6 et 7) sont conformées en disques circulaires dentés extérieurement.

7. Outil frontal selon la revendication 5, **caractérisé en ce que** les disques sont actionnés de manière déphasée l'un par rapport à l'autre, de façon qu'ils adoptent une position pour un engrènement.

8. Outil frontal selon la revendication 5, **caractérisé en ce que** les rouleaux cueilleurs (29, 30) de chaque équipement de cueillage (19, 20) sont conformés avec des longueurs différentes et sont munis, à leur extrémité respective tournée vers les étoiles d'alimentation (6 et 7), d'une vis d'amenée (31, 32).

9. Outil frontal selon la revendication 8, **caractérisé en ce que** la vis d'amenée (31) du rouleau cueilleur (25) situé respectivement à l'extérieur par rapport au plan médian longitudinal est conformée de manière prolongée par rapport à la vis d'amenée (32) de l'autre rouleau cueilleur (26) de la paire de rouleaux cueilleurs (29 et 30).

10. Outil frontal selon la revendication 1, **caractérisé en ce que** les équipements d'amenée (34, 35) sont conformés en moyeu (36) avec des dents d'amenée (37, 38) qui en partent et s'étendent de manière courbée.

11. Outil frontal selon la revendication 1, **caractérisé en ce que** les équipements d'amenée (34, 35) sont conformés en moyeu (36) avec des dents d'amenée (37, 38) qui en partent, l'équipement de cueillage respectif (19, 20) s'étendant à la manière d'une corde par rapport à un cercle d'enveloppe circonscrivant les dents d'amenée (37, 38).

12. Outil frontal selon la revendication 2, **caractérisé en ce que** les étoiles d'alimentation (6 et 7) disposées au centre de l'outil frontal de récolte (1), de part et d'autre du plan médian longitudinal (10), sont entourées vers le haut par un moyen de recouvrement (13), le moyen de recouvrement (13) étant conformé avec un contour extérieur sensiblement triangulaire et formant, sur ses bords (16 et 17) voisins des équipements de cueillage (19 et 20), des portions de guidage d'un canal de guidage (8, 9) pour les tiges de maïs.
